# EUROPÄISCHE PATENTSCHRIFT

(11) **EP 0 585 264 B1**
(45) Veröffentlichungstag und Bekanntmachung des Hinweises auf die Patenterteilung: **02.10.1996**
(21) Anmeldenummer: 92909432.4
(22) Anmeldetag: 06.05.1992
(51) Int. Cl.: C01G 25/02, B01J 2/08, B01J 2/04

(54) **VERFAHREN ZUR HERSTELLUNG VON PULVER AUS TEILSTABILISIERTEM ZIRKONOXID**
PROCESS FOR PRODUCING POWDER FROM PARTIALLY STABILISED ZIRCONIUM OXIDE
PROCEDE DE FABRICATION DE POUDRE A PARTIR D'OXYDE DE ZIRCONIUM PARTIELLEMENT STABILISE

(30) Priorität: 09.05.1991 DE 4115172
(43) Veröffentlichungstag der Anmeldung: 09.03.1994
(73) Patentinhaber: Nukem GmbH, D-63754 Alzenau (DE)
(72) Erfinder: BRANDAU, Egbert, Dr., D-8755 Alzenau (DE); KADNER, Martin, D-6457 Maintal 1 (DE); BRAUNEIS, Edwin, D-6458 Rodenbach 1 (DE)
(74) Vertreter: Stoffregen, Hans-Herbert, Dr. Dipl.-Phys.
(86) Internationale Anmeldenummer: EP9200981
(87) Internationale Veröffentlichungsnummer: WO9219538

(56) Entgegenhaltungen:
- FR-A- 1 578 319
- FR-A- 2 230 409
- US-A- 4 043 507

## Beschreibung

Die Erfindung bezieht sich auf ein Verfahren zur Herstellung von Pulver aus teilstabilisiertem Zirkonoxid einer Korngröße von zumindest 100 µm, vorzugsweise zwischen 100 µm und 1000 µm, vorzugszweise bestimmt für hochdichte keramische Werkstoffe.

In neuerer Zeit geht der Trend der Keramikentwicklung hin zu immer hochwertigeren keramischen Werkstoffen mit dem Ziel, die vorteilhaften Eigenschaften dieser Materialien,wie z.B. gute Temperaturbeständigkeit, große Härte und Verschleißfestigkeit sowie gute Chemikalienbeständigkeit, im technischen Bereich auszunutzen. An oberster Stelle steht dabei, höchste Dichten und Festigkeiten der Formkörper zu erreichen, die Sintertemperatur zu senken und in vielen Anwendungsfällen auch die Reinheit der Keramikwerkstoffe wesentlich zu erhölen.

Um diese Ziele zu erreichen, müssen möglichst reine, homogene, gut verpreßbare Pulver mit hoher Sinterfähigkeit im technischen Maßstab zur Verfügung stehen, die durch einfache Verfahren möglichst preisgünstig hergestellt werden können.

Ein aussichtsreicher Werkstoff, der die genannten Anforderungen erfüllen kann, ist teilstabilisiertes Zirkonoxid, sog. PSZ. Bei diesem Werkstoff wird die tetragonale Kristallstruktur, die bei reinem Zirkonoxid nur bei Temperaturen über 1000°C stabil ist, durch Zusatz geeigneter Additive stabilisiert. Als stabilisierende Additive werden Metalloxide wie CaO, MgO, Y₂0₃, CeO₂ u.a. zugesetzt. Wichtig dabei ist die Homogenität der Pulvermischung, was bei den üblichen Trockensyntheseverfahren nur schwer und auf umständlichem Wege in mehreren Stufen, wie Erzeugung von Vorprodukten durch Mischen der Ausgangspulver, Pressen und Wärmebehandeln und schließlich Mahlen zu einem feinen Pulvergemisch, erreicht werden kann. Auch Varianten wie Schmelzen eutektischer Gemische sind zur Verbesserung der Homogenität bekannt geworden.

Zur Verbesserung der Homogenität und Sinterfähigkeit der Pulvergemische sind sogenannte Naßsyntheseverfahren entwickelt worden. Dabei werden entweder Salzlösungen, die die Keramik bildenden Komponenten enthalten, ausgefällt bzw. anderweitig verfestigt oder Hydrosole dieser Stoffe durch Gelbildung verfestigt. Neuerdings werden auch Alkoholate der die Keramik bildenden Metalle zur Gelbildung herangezogen.

Bei den Kofällungsverfahren werden feindisperse Pulver meist aus den Chloriden oder Nitraten der Metalle durch Hydroxidfällung mittels basischer Stoffe, meist Ammoniak, oder durch Fällung von leichtzersetzlichen Salzen organischer Säuren, z.B. Oxalsäure, erzeugt.

In der DE-A 340 80 96 wird ein Verfahren beschrieben, bei dem ein Ausgangspulver für ein CeO₂-stabilisiertes Zirkonoxid-Sinterprodukt durch Ausfällen von Zirkon- und Cerhydroxid mit Ammoniakwasser hergestellt wird. Erfahrungsgemäß entstehen bei solchen Hydroxidfällungen jedoch voluminöse, oft schlecht filtrierbare und nur schwer auswaschbare Niederschläge, die sich zudem schlecht handhaben lassen, und die nach dem Trocknen und Kalzinieren großstückige Brocken ergeben, welche sich erst durch langwieriges Sieben zu feinem, rieselfähigem Pulver verarbeiten lassen.

Besondere Bedeutung wird neuerdings den Sol-Gel-Verfahren beigemessen, weil dabei sehr sinteraktive Pulver mit großer Oberfläche entstehen. Im einfachsten Falle lassen sich Sole durch Hydrolyse geeigneter Salziösungen in der Siedehitze herstellen (DE-A 34 08 096). Beim Eintrocknen des Sols und nachfolgenden Kalzinieren entstehen aber auch grobstückige Geibrocken, die erst noch längere Zeit zu Pulver gemahlen werden müssen.

Die klassischen Methoden der Sol-Gel-Technik im allgemeinen und zur Herstellung von Y₂O₃-stabilisiertem Zirkonoxid im speziellen beschreiben J.L. Woodhead und D.L. Segal in "Sol-gel processing", Chemistry in Britain, April 1984. S; 310-313. Breiter Raum wird dabei der Solherstellung gewidmet, wobei ausdrücklich darauf hingewiesen wird daß die Herstellungskosten in Relation zum Wert des erzeugten keramischen Produkts stehen müssen. In der Tat sind die dort genannten Wege wirtschaftlich sehr aufwendig, weil chemisch kompliziert. Die Solventextraktion als Methode zur Herstellung von stabilen Hydrosolen, die ein großes Anionendefizit haben müssen, ist mit langkettigen Aminen (R₃C-NH₂ mit C₁₈ < R < C₂₂) zwar relativ einfach durchzuführen, jedoch erfordert die Regenerierung dieser Amine einen erheblichen chemischen Aufwand und führt zu großem Abfallvolumen. Auch die Hydroxidfällung und nachfolgende Peptisation des salzfrei gewaschenen Niederschlages mit wenig Mineralsäure, meist Salpetersäure, ergibt große Abfallvolumina an Filtrat. Außerdem müssen die zunächst verdünnt anfallenden Sole durch Kochen erst wieder aufkonzentriert werden. Die Methode der thermischen Zersetzung von Metallsalzen leichtflüchtiger Säuren, wie die Chloride oder Nitrate, hat ebenfalls Nachteile; einmal wegen der Korrosionswirkung der HCl- bzw. NOₓ.Dämpfe, zum anderen, weil nicht alle Elemente solche Salze bilden; außerdem erhält man nur unter genau definierten Bedingungen peptisierbare Oxidhydrate, wie am Beispiel Thoriumnitrat beschrieben ist.

In der GB-B 1 181 794 wird die Herstellung solcher Hydrosole bzw. -gele des Zirkons mit erheblichem Anionendefizit beschrieben. Wichtig dabei ist, daß ein genaues molares NO₃⁻/ Zr-Verhältnis zwischen 1,0:1 und 1,1:1 eingehalten wird. Von großem Nachteil ist, daß dieser Solherstellung der oben genannte Prozeßschritt der Hydroxidfällung mit nachfolgendem Auswaschen des Nitrats vorausgehen muß, bevor mit definiert kleiner Salpetersäuremenge zum Sol peptisiert werden kann. Das durch Trocknen hergestellte Gel hat den Nachteil, daß es stückig anfällt und verhältnismäßig viel Nitrat enthält. Es wirkt deshalb beim Kalzinieren durch NOₓ-Abgabe stark korrodierend, außerdem muß es noch feingemahlen werden. Die Fällung durch Aminextraktion hat den Nachteil, daß das Amin regeneriert und das organische Lösemittel zurückgewonnen werden muß.

Aus der FR-A 1 578 319 ist ein Sol-Gel-Velfahren zur Herstellung von Zirkonoxidkugeln zu entnehmen.

Der Nachteil des Sol-Gel-Verfahrens in seinen Varianten besteht somit hauptsächlich in der verfahrenstechnisch aufwendigen Solherstellung, entweder durch Fällung der Metallhydroxide und Peptisation oder durch Entfernung der Anionen mittels langkettiger organischer Amine (Solventextraktion) oder auch durch thermische Zersetzung von Salzen leichtflüchtiger Säuren (Salpetersäure, Oxalsäure) und anschließende Peptisation der Metalloxide.

Der EP 0 261 590 A2 ist ein Verfahren zur Herstellung von Metalloxiden oder Metallmischoxiden zu entnehmen. Dabei wird eine wässrige Lösung eines Zirkonsalzes, welches ein Additiv enthalten kann, mittels Ultraschall vertropft. Hierdurch werden Tropfengrößen zwischen 10 und 50 µm erzeugt.

Zwar zeigt der Einsatz von Ultraschall den Vorteil, daß Tropfen geringer Größe erzielt werden können. Nachteilig ist jedoch, daß sich Tropfen mit Durchmessern großer Streuung ergeben. Auch sind Zwillings- und Drillingsbildungen festzustellen. Ferner ist eine gleichmäßige Kugelgeometrie nicht gegeben.

Ein Verfahren zur Herstellung eines Zirkondioxidpulvers wird in der DE 39 32 781 A1 beschrieben. Hierzu wird kristallwasserhaltiges Zirkonylchlorid aufgeschmolzen, um sodann in die Schmelze gasförmiges Ammoniak einzuleiten.

Um Keramikpulver herzustellen, ist es bekannt, in eine Emulsion ein Reaktionsgas einzuleiten (EP 0 304 243 A1).

Weitere Verfahren zur Herstellung von unter anderem Zirkonpulvern oder anderen Pulvern sind den US 3,384,687, US 4,664,894 und US 4,140,771 zu entnehmen.

Der FR-A-2 230 409 ist eine Vorrichtung zur Herstellung sphärischer Tropfen aus UO₂ zu entnehmen.

Der vorliegenden Erfindung liegt die Aufgabe zugrunde, ein Verfahren zur Herstellung von Pulver aus teilstabilisiertem Zirkonoxid für hochdichte keramische Werkstoffe zu finden, durch das ein homogenes, gut verpreßbares, sinterfähiges Pulver mit großer Oberfläche erzeugt werden kann, welches zudem eine gute Rieselfähigkeit haben und außerdem wirtschaftlich herstellbar sein soll. Auch sollen die gewonnenen Teilchen eine gleichmäßige Kugelgeometrie mit kleiner Streuung aufweisen.

Die Aufgabe wird eifindungsgemäß dadurch gelöst, daß eine zumindest ein gehärtetes und/oder feindispersieites Additiv enthaltende, bis kurz vor dem Fällpunkt abgestumpfte wäßrige Lösung eines Zirkonsalzes in Form von Zirkonnitrat mit einem Nitrat-Zirkon-Molverhältnis über 1,1:1 in Tröpfchenform mittels elektromagnetischer Schwingungsanregung vertropft wird, daß die Tröpfchen zunächst durch Einwirken von Ammoniakgas zu diskreten Gelteilchen vorverfestigt und sodann in einem wäßrigen ammoniakalischen Fällbad aufgefangen und darin zu diskreten festen Gelteilchen gehärtet werden, daß danach die Gelteilchen
- frei von Ammoniumsalzen gewaschen und anschließend
- mit einem mit Wasser mischbaren Alkohol entwässert,
- getrocknet und
- kalziniert werden.

Insbesondere ist, vorgesehen, daß als Additive wasserlösliche Metallnitrate und/oder feindisperse Metalloxide verwendet werden. Auch kann zur Entwässerung der Gelteilchen Isopropanol verwendet werden. Zur Erzeugung der mechanischen Schwingungen kann die elektromagnetischer Schwingungen auf eine flexible Rohrwand übertragen werden.

Durch Kofällung von wäßrigen Zirkonsalzlösungen mit zugesetzten Salzen stabilisierender Metalloxide können homogene, sinteraktive Pulver hergestellt werden.

Erfindungsgemäß wird diese Kofällung wäßriger Salzlösungen von Zirkon und Additiven durch Vertropfen der Lösung und Einwirkung von Ammoniak auf die Tropfen durchgeführt. Zur Erzielung einer geringen Komgrößenstreuung erfolgt die elektromagnetische Schwingungsanregung. Hierzu kann z. B. eine Düse und eine Leitung, durch die die Lösung fließt und vertropft wird, elektromagnetisch in Schwingung versetzt werden. Überraschenderweise hat sich gezeigt, daß Zirkonhydroxid mit Additiven auch dann als Gel gefällt wird, wenn Lösungen verwendet werden, bei denen das Nitrat/Zirkon-Molverhältnis über 1,1:1 liegt, und die ein wasserlösliches organisches Polymer, vorzugsweise Polyvinylalkohol, gelöst enthalten. So können auch Zirkonsalze, z.B. Carbonat, Nitrat, Chlorid, von stöchiometrischer Zusammensetzung vewendet werden, wie z.B. Zr(NO₃)₄ oder ZrO(NO₃)₂.

Um den pH-Wert der verwendeten Lösungen so einzustellen, daß eine spontane Hydroxidfällung in den Tropfen erfolgt, wird die Lösung vorher mit Ammoniak maximal bis kurz vor den Fällpunkt abgestumpft. Das dabei gebildete Ammoniumsalz stört im Prozeß nicht, da es später bei der Fällung sowie so entsteht.

Gemäß der Erfindung werden die Tropfen vor dem Emtauchen in die Ammoniaklösung in einer Ammoniakgasatmosphäre chemisch vorgehärtet. Durch die Maßnahme wird während des Fällens eine dünne Haut an der Tropfenoberfläche gebildet und so die Kugelform stabilisiert. Dadurch wird das Zerplatzen der Teilchen auf der Oberfläche der Ammoniaklösung verhindert.

Bei dieser Art der Kofällung gemäß der Erfindung aus Lösung in Gegenwart eines gelösten organischen Polymers entstehen Oxidhydrate von Gelstruktur mit großer Oberfläche. Diese Pulver sind daher besonders sinteraktiv und ergeben hohe Sinterdichten der daraus hergestellten Formkörper. Durch Kofällung von Zirkonoxid und Additiven aus einer homogenen Lösung dieser Komponenten in Gegenwart eines gelösten organischen Polymers, vorzugsweise Polyvinylalkohol, erhält man erfindungsgemäß ideal vermischte, d.h. vollständig homogene Pulver von gleichbleibender Qualität und hoher Sinterfähigkeit. Falls ein Additiv nicht gelöst werden kann oder aufgrund des zu hohen pH-Wertes der Zirkonsalzlösung ausgefällt wird, kann das Additiv auch in der Lösung suspendiert werden. In diesem Falle setzt man der Lösung mit besonderem Vorteil ein Dispergiermittel zu, vorzugsweise einen primären Alkohol, insbesondere Isopropanol oder Tetrahydrofururylalkohol. Wenn das Additiv in äußerst feindisperser Form vorliegt, z.B. als feingemahlenes Pulver oder als frischgefällter amorpher Niederschlag, erhält man ebenfalls ein homogenes Pulver von hoher Sinterfähigkeit.

Die Kofällung der Oxidhydrate in Tropfenform hat weiterhin den Vorteil, daß dadurch regelmäßige Teilchen von engem Kornspektrum hergestellt werden können. Die Teilchengröße des Feststoffes kann dabei durch Einstellung der Tropfengröße gesteuert werden.

Dadurch ist es möglich. die Korngröße in einem weiten Bereich zu variieren, vorzugsweise zwischen 0.1 und 1 mm. Aber auch größere Teilchen können leicht hergestellt werden. Dafür benutzt man ein Verfahren zur Zerlegung eines Flüssigkeitsstrahles in Tropfen. Erfindungsgemäß werden die Tropfen durch Einwirkung mechanischer Schwingungen auf die durch eine Düse ausfließende Flüssigkeit erzeugt, indem elektromagnetische Schwingungen entweder direkt auf die Düse oder auf die Wand eines flexiblen Schlauches, durch den die Flüssigkeit kurz vor Austritt aus der Düse fließt, übertragen werden.

Der Zusatz eines gelösten, organischen Polymers hat nicht nur den Vorteil, daß die Hydroxide von Zirkon und Additiven als Gele gefällt werden, sondern erlaubt gleichzeitig auch die Einstellung einer für die Tropfenbildung und -stabilisierung günstigen Viskosität der Lösung. Dazu reichen schon kleine Mengen von 1 bis 10 g je Liter Lösung aus. Insbesondere in bezug auf die möglichst vollständige Entfernung dieses Hilfsstoffes beim Kalzinierungsschritt hat sich Polyvinylalkohol besonders bewährt. Aber auch andere Stoffe dieser Art, wie Polyethylenglykol, Methylcellulose oder Dextrin, können mit Erfolg verwendet werden.

Aufgrund der Gleichmäßigkeit der Tropfen und der daraus hergestellten, frisch gefällten Feststoffteilchen ist eine gleichmäßige Behandlung bei der Weiterverarbeitung gewährleistet, wodurch die Erzeugung von Pulvern mit reproduzierbaren Eigenschaften sichergestellt ist, was eine der wichtigsten Voraussetzungen für die Herstellung hochqualifizierter Sinterformkörper ist. Die Gleichmäßigkeit der Teilcheneigenschaften, wie z.B. Dichte und Durchmesser, und die gute Rieselfähigkeit der Teilchen ermöglichen das gleichmäßige Füllen von Preßformen für die Herstellung von Grünlingen, die anschließend dem Sinterprozeß zugeführt werden. Für das Füllen der Matrize ist von besonderem Vorteil, daß bei Verwendung von kugelförmigen Teilchen mit engem Kornspektrum im Bereich zwischen 0,1 mm und 1 mm keine Agglomerate gebildet werden und daß stets gleiche Füllfaktoren von rd. 0,6 störungsfrei erreicht werden. Durch Anwendung mehrerer unterschiedlich großer Teilchensorten, z.B. Teilchen mit den Durchmessern ca. 0,8 mm und ca. 0,2 mm, kann der Füllfaktor durch Ausfüllen der Zwickel zwischen den größeren Teilchen weiter bis auf etwa 0,8 erhöht werden. Dadurch erreicht man besonders kurze Preßwege.

Die gleichmäßige Behandlung der Teilchen in den nachfolgenden Prozeßschritten Waschen, Trocknen und Kalzinieren garantiert ferner die Gleichmäßigkeit der Eigenschaften in bezug auf Porosität und Zeidrückfestigkeit. Es hat sich gezeigt, daß nach dem Herstellungsverfahren gemäß der Erfindung Teilchen mit besonders niedriger Zerdrückfestigkeit von weniger als 1 Newton/Teilchen herstellbar sind, deren Eigenschaften mit denen eines Pulvergranulats vergleichbar sind. Diese Teilchen haben einerseits die für die Handhabung von Schüttgut ausreichende Festigkeit, andererseits sind sie aber von so lockerem Zusammenhalt, daß sie schon bei geringstem Druck zu Pulver zerfallen, dem man die ursprüngliche Form nicht mehr ansieht. Bei dem erfindungsgemäßen Verfahren wird somit die Entstehung der sog. "Brombeerstruktur" vermieden, die beim Zusammenpressen einer Teilchenschüttung von regelmäßiger (kugelförmiger) Gestalt üblicherweise entsteht, und es werden die Vorteile, die sich aus Kofällung und Rieselfähigkeit des Pulvers ergeben, auf besonders wirtschaftliche Weise zur Herstellung von Keramikkörpern mit dichtem, homogenem Gefüge genutzt, was selbst für den Fachmann überraschend ist.

Bei der chemischen Reaktion der Metallsalzlösungen mit Ammoniak entstehen Ammoniumsalze. Wegen der bevorzugten Verwendung von Metallnitraten und -chloriden werden hauptsächlich Ammoniumnitrat und Ammoniumchlorid gebildet. Diese Stoffe müssen vor der Weiterverarbeitung der Teilchen ausgewaschen werden, weil die Teilchen sonst bei der Wärmebehandlung infolge Zersetzung dieser Salze zerstört werden. Im Gegensatz zum Auswaschen von üblichen großvolumigen Hydroxidniederschlägen bereitet das Waschen der nach dem erfindungsgemäßen Verfahren hergestellten Gelteilchen in Kugelform keine Schwierigkeiten, weil die Austauschgeschwindigkeit (Diffusion) zwischen Teilchen und umgebender Flüssigkeit sehr schnell erfolgt, d.h. nur wenige Minuten dauert. Dadurch ist es möglich, den Waschprozeß auf einfache Weise kontinuierlich zu gestalten, weil hierbei das fluide Verhalten der Teilchen in wäßriger Phase auf besonders vorteilhafte Weise ausgenutzt werden kann.

Nach dem Waschen werden die Teilchen üblicherweise bei 100°C bis 180°C an Luft getrocknet, wobei die Waschflüssigkeit verdampft und trockene kugelförmige Gelteilchen erhalten werden. Diese Gelteilchen werden anschließend an Luft kalziniert, um das organische Polymer zu zersetzen. Dieser Kalzinierungsprozeß läuft im Temperaturbereich zwischen 300°C und 1.000°C ab, er wird jedoch mit besonderem Vorteil für die Erzielung guter Eigenschaften der Teilchen hinsichtlich Verpreßbarkeit zu Formkörpern und Sinterfähigkeit der Preßlinge zwischen 600°C und 900°C durchgeführt.

Zur Verbesserung der Reproduzierbarkeit der Kalzinierungsergebnisse hat es sich als nützlich erwiesen, unter strömender Luft von konstanter Luftfeuchte im Bereich zwischen 10g und 30 g Wasser je Kubikmeter Luft zu arbeiten. Je nach Zusammensetzung der Ausgangslösung lassen sich dabei Restkohlenstoffgehalte im Bereich von 10 bis 50 ppm, BET-Oberflächen im Bereich von 10 bis 200 m²/g und Zerdrückfestigkeiten von < 0,2 bis 2 Newton/Teilchen bei Teilchengrößen zwischen 0,2 mm und 0,6 im Enddurchmesser für Teilchen mit mindestens 80 Gew.-% ZrO₂ gezielt einstellen.

Verwendet man als Waschflüssigkeit Wasser, dann entsteht die kubische Kristallstruktur des Pulvers, wie röntgendiffraktometrische Untersuchungen von Y₂O₃-stabilisierten ZrO₂-Teilchen gezeigt haben. Diese Struktur ist aber für die Fabrikation hochfester Formkörper nicht erwünscht.

Es ist nun überraschenderweise gefunden worden, daß der Entzug des Wassers aus den Gelteilchen mit Hilfe eines mit Wasser mischbaren Alkohols, vorzugsweise Isopropanol, und nachfolgendes Trocknen und Kalzinieren zu einem Y₂O₃-stabilisierten ZrO₂-Pulver führt, das die drei Kristallstrukturen monoklin, tetragonal und kubisch nebeneinander enthält. Teilchen, die aus solchen Pulvern bestehen, sind zur Herstellung gesinterter, teilstabilisierter ZrO₂-Formkörper gut geeignet. Es hat sich gezeigt, daß daraus durch Sintern unter Wasserstoff bei 1700°C beispielsweise zylindlische Formkörper von sehr hoher Dichte zwischen 95% und 98% der theoretischen Dichte ohne Risse herstellbar sind. Der Wasserentzug aus den Teilchen ist nicht auf Isopropanol beschränkt, sondern kann mit gleichem gutem Ergebnis z.B. auch mit Methanol oder Butanol durchgeführt werden.

Ein Verfahren zur Herstellung von hochdichten Keramikkörpern aus Y₂O₃ teilstabilisiertem ZrO₂ zeichnet sich dadurch aus,
- daß eine Gießlösung enthaltend
   - eine Polyvinylalkohol-Lösung
   - eine bis kurz vor dem Fällpunkt abgestumpfte Zirkonnitrat-Lösung mit einem Nitrat-Zirkon-Molverhältnis über 1,1:1 sowie
   - eine Yttriumnitrat-Lösung
- durch elektromagnetische Schwingungsanregung zur Bildung von Tröpfchen vertropft wird,
- daß die Tröpfchen zur spontanen Ausbildung einer festen Oberflächenhaut einer Ammoniakgasatmosphäre ausgesetzt werden,
- daß die so oberflächenverfestigten Teilchen in einer Ammoniaklösung aufgefangen werden.
- daß nach einer Verweilzeit in der Ammoniaklösung die Teilchen
   - nitratfrei gewaschen,
   - mit einem Alkohol entwässert und
   - sodann getrocknet werden,
- und daß anschließend gut rieselfähige Teilchen kalziniert, zu Formkörpern geformt und gesintert werden.

Dabei kann die Verweilzeit der oberflächenverfestigten Teilchen in der Ammoniaklösung in etwa 30 min. betragen. Insbesondere werden die Teilchen an Luft vorzugsweise in einem Temperaturbereich von in etwa 400 °C - 700 °C, vorzugsweise von 500 °C kalziniert.

Weitere Einzelheiten, vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von das erfindungsgemäße Verfahren erläuternden Beispielen.

### Beispiel 1:

Für die Herstellung von hochdichten Keramikkörpern aus Y₂O₃-stabilisiertem ZrO₂ wurde eine wäßrige Lösung aus Zirkon- und Yttriumnitrat mit Zusatz von Polyvinylalkohol verwendet. Diese als Gießlösung bezeichnete Lösung enthielt je Liter:
47,5 g Zr in Form von abgestumpfter Zr(NO₃)₄-Lösung,
2,5 g Y als Y(NO₃)₃-Lösung,
5,0 g Polyvinylalkohol (PVA) in Wasser gelöst.

Die abgestumpfte Zr(NO₃)₄-Lösung wurde durch Lösen von 180 g Zr(NO₃)₄ x aq in 500 ml Wasser und langsame Zugabe von 85 ml 7,4 molarer Ammoniaklösung bei Raumtemperatur hergestellt. Dabei stieg der pH-Wert auf 1,1 an. Diese abgestumpfte Lösung enthielt je Liter 1 mol Zr und 4 Mol NO₃⁻, davon 1 mol als NH₄NO₃.

Die Y(NO₃)₃-Lösung wurde durch Auflösen von Y₂O₃-Pulver in Salpetersäure und Verdünnen auf 0.664 mol Y/l hergestellt.

Die Gießlösung wurde in Tröpfchen umgewandelt, die durch chemische Reaktion mit Ammoniak feste, kugelförmige Teilchen aus kogefälltem Zirkon- und Yttriumoxidhydratgel bildeten. Aus einem Vorratsbehälter wurde die Gießlösung durch einen flexiblen Schlauch vom Durchmesser 5 im zu einer Düse vom Durchmesser 0.35 mm gedrückt, wo die Flüssigkeit ausfloß und Tröpfchen bildete. Kurz vor der Düse war der flexible Schlauch mit einem elektromagnetischen Vibratorsystem mechanisch derart verbunden, daß die Schwingungen vom Vibrator über die Schlauchwand auf die strömende Flüssigkeit übertragen wurden. Dadurch zerfiel der aus der Düse fließende Flüssigkeitsstrahl an Luft in gleich große Tröpfchen, wobei die Tropfenzahl je Sekunde der Vibratorfrequenz von 1.200 Hertz entsprach.

Anschließend fielen die Tröpfchen über eine Strecke von ca. 8 cm Länge durch eine Ammoniakgasatmosphäre, wo sich eine feste Oberflächenhaut bildete. Sodann wurden die ursprünglichen Tröpfchen als diskrete runde Teilchen in Ammoniaklösung aufgefangen. Nach einer Verweilzeit von 30 min wurden die Teilchen mit Wasser nitratfrei gewaschen, danach mit Isopropanol entwässert und dann im Rotationsverdampfer getrocknet.

Die trockenen, gut rieselfähigen Teilchen wurden auf Quarzschalen in einem Muffelofen 3 Stunden bei 500°C an Luft kalziniert. Das erzeugte Produkt war ein grobdisperses Pulver aus kugelförmigen Teilchen mit enger Korngrößenverteilung im Bereich von 250 bis 300 µm und hatte die Zusammensetzung ZrO₂/4,7 Gew.% Y₂O₃.

Das Pulver wurde in die Matrize einer Presse eingefüllt und mit einem Preßdruck von 260 MPa zu Zylindern vom Durchmesser 7 mm und einer Höhe 7 mm verarbeitet. Die Gründichte dieser Preßlinge lag bei 2,46 g/cm³. Anschließend wurden die Zylinder bei 1,500°C 2h an Luft gesintert, wobei sie eine Sinterdichte von 5,94 g/cm³ erreichten, was einer theoretischen Dichte von mehr als 95% entspricht.

### Beispiel 2:

Eine wäßrige Gießlösung aus Zirkon- und Yttriumnitrat mit Zusatz von Polyvinylalkohol wurde wie in Beispiel 1 zu grobdispersem Pulver aus kugelförmigen Teilchen von 250 bis 300 µm Durchmesser der Zusammensetzung ZrO₂/4,7 Gew.% Y₂O₃ verarbeitet.

Die Gießlösung enthielt wiederum 47,5 g/l Zr in Form von abgestumpfter Zirkonnitrat-Lösung und 2,5 g/l Y als Y(NO₃)₃-Lösung sowie 5 g/l PVA in Wasser gelöst.

Die abgestumpfte Zirkonnitrat-Lösung wurde durch Auflösen von käuflichem Zirkoncarbonat in Salpetersäure und Zugabe von Ammoniaklösung folgendermaßen hergestellt:

1.000 g Zirkoncarbonat, das 28,6 Gew.% Zr und 6,6 Gew.% CO₃²⁻ enthielt, wurden in 942 ml 5 mol/l HNO₃ gelöst. Die klare Lösung war wie folgt charakterisiert:

| | |
|---|---|
| Molverhältnis NO₃⁻ : Zr = | 1.5 : l |
| pH Wert | - 0.2 |
| Zr-Gehalt | 189,3 g/l |
| Dichte | 1.352 kg/l |
| Viskosität | 4 mPa·s |

Von dieser Lösung wurden 250.9 ml, entsprechend 47,5 g Zr, mit 51,3 ml 7,35 mol/lAmmoniak tropfenweise bis zur beginnenden Trübung neutralisiert. Dabei stieg der pH-Wert auf 1,9 an, die Viskosität blieb unverändert.

Die zuerst in Wasser, dann mit Isopropanol gewaschenen Teilchen wurden bei 80°C getrocknet, dann in Teilmengen jeweils bei 400°C, 500°C, 600°C und 700°C 24h an Luft kalziniert und anschließend mittels Röntgenstrukturanalyse auf ihre Kristallstruktur untersucht. Es wurde gefunden, daß in allen Fällen eine Mischung der Kristallgitter monoklin. kubisch und tetragonal vorlag.

Die Hauptmenge des aus getrockneten Teilchen bestehenden Pulvers wurde bei 700°C 2h an Luft kalziniert, dann in eine Matrize gefüllt und mit einem Preßdruck von 520 MPa zu Zylindern einer Gründichte 2,94 g/cm³ gepreßt. Das anschließende Sintern an Luft bei 1200°C ergab rißfreie Sinterkörper von 5,72 g/cm³ Dichte; bei 1500°C Sintertemperatur wurde eine Dichte von 5,94 g/cm³ erreicht, entsprechend mehr als 95% der theoretischen Dichte.

Eine weitere Teilmenge Teilchen wurde bereits nach dem Wasserwaschen entnommen. separat getrocknet, dann ebenfalls bei 400°C, 500°C und 600°C 24h an Luft kalziniert und anschließend einer Kristallstrukturanalyse unterzogen. Es zeigte sich, daß in allen drei Fällen nur das kubische Kristallgitter vorhanden war. Die aus solchem Pulver hergestellten Zylinder hatten nach dem Sintern eine Vielzahl Risse und waren daher unbrauchbar.

### Beispiel 3:

Nach Beispiel 2 hergestellte, bei 700°C 2h an Luft kalzinierte Teilchen der Zusammensetzung ZrO₂/4,7 Gew.% Y₂O₃ wurden bei einem Preßdruck von 330 MPa zu Zylindern vom Durchmesser 11 mm und einer Höhe 11mm verarbeitet.

Bei 1.400°C wurden diese Zylinder, die eine Gründichte von 2,80 g/cm³ hatten, 20h an Luft gesintert; dabei wurde eine Sinterdichte von 5,93 g/cm³ erreicht, entsprechend 95 % theoretischer Dichte. Einige Grünlinge wurden bei 1650°C 2h unter Wasserstoff gesintert und erreichten eine Dichte von 5,95 g/cm³, das sind 96% der theoretischen Dichte.

### Beispiel 4:

Eine Gießlösung der Zusammensetzung
45 g Zr/l
5 g Y/l
5 g PVA/l
wurde entsprechend Beispiel 1 zu grobdispersem Pulver aus kugelförmigen Teilchen von 200 - 300 µm Durchmesser der Zusammensetzung ZrO₂/9.5 Gew.% Y₂O₃ verarbeite. Es wurden 2377 ml der in Beispiel 2 genannten Zirkonnitrat-Lösung, entsprechend 450 g Zr, mit 482 ml 7,35 mol/l Ammoniak bis zur beginnenden Trübung neutralisiert und mit 846 ml einer 0,664 molaren Yttriumnitrat-Lösung sowie 625 ml einer 8 %igen PVA-Lösung und Wasser zu 10 l Gießlösung vermischt.

Die entsprechend Beispiel 1, jedoch unter Verwendung einer Zehndüsenplatte mit 10-fachem Durchsatz hergestellten, getrockneten Teilchen wurden bei 700°C 3h an Luft kalziniert und dann anhand einer repräsentativen Probe wie folgt charakterisiert:

| | |
|---|---|
| Mittl. Teilchendurchmesser | 245 µm |
| Standardabweichung | 5 µm |
| Quecksilberdichte | 2,08 g/cm³ |
| Zerdrückfestigkeit | 0,76 Newton/Teilchen |
| Standardabweichung | 0,15 Newton/Teilchen |
| Spezif. Oberfläche nach BET | 38,2 m²/g |
| Glühverlust | 2,03 Gew.% |
| C-Gehalt | 0,02 Gew.% |

Die Teilchen wurden in einer Matrize bei einem Preßdruck von 610 MPa zu zylindrischen Körpern von Durchmesser 11 mm, einer Höhe 11 im und einer Gründichte 2,85 g/cm³ verarbeitet. Ein 2-stündiges Sintern an Luft bei 1.400°C ergab rißfreie Zylinder aus ZrO₂/9,5 Gew.% Y₂O₃ der Dichte 5,82 g/cm³, entsprechend 95% der theoretischen Dichte.

### Beispiel 5:

Fünf Liter einer Gießlösung der Zusammensetzung
43,4 g Zr/l
6,6 g Ce/l
5,0 g PVA/l
wurden wie in Beispiel 1 in großdisperses Pulver aus kugelförmigen Teilchen der Korngröße 200 - 300 µm und der Zusammensetzung ZrO₂/9 Mol% CeO₂ umgewandelt.

Von der in Beispiel 2 genannten Zirkonnitrat-Lösung wurden 1 146 ml, entsprechend 217 g Zr, mit 234 ml 7,35 molarem Ammoniak bis zur beginnenden Trübung neutralisiert und dann mit 236 ml einer 1.0 molaren Ce(NO₃)₃-Lösung sowie mit 313 ml einer 8 Gew.%-igen PVA-Lösung zu einer homogenen Gießlösung vermischt. Diese Gießlösung wurde, ähnlich wie in Beispiel 1, jedoch unter Verwendung einer Zehndüsenplatte mit 10-fachem Durchsatz in Tröpfchen umgewandelt, mit Ammoniak verfestigt, mit Wasser und Isopropanol gewaschen, getrocknet und bei 700°C 3h an Luft kalziniert.

Die Analyse einer repräsentativen Probe ergab folgende Meßwerte:

| | |
|---|---|
| Mittl. Teilchendurchmesser | 251 µm |
| Standardabweichung | 3 µm |
| Quecksilberdichte | 1,97 g/cm³ |
| Zerdrückfestigkeit | 0,47 Newton/Teilchen |
| Standardabweichung | 0,18 Newton/Teilchen |
| Spezif. Oberfläche nach BET | 33,2 m²/g |
| Glühverlust | 1,04 Gew.% |
| C-Gehalt | 0,016 Gew.% |

Die Röntgenstrukturanalyse ergab, daß CeO₂ in der kubischen Kristallform vorlag, während bei ZrO₂ Reflexe für drei Gittertypen (kubisch, tetragonal und monoklin) gefunden wurden.

Das aus uniformen Teilchen bestehende Pulver wurde in eine Matrize gefüllt und mit einem Preßdruck von 450 MPa zu Zylindern vorn Durchmesser 11 mm, einer Höhe 11 mm und einer Gründichte 2,78 g/cm³ gepreßt. Ein 4-stündiges Sintern an Luft bei 1.500°C ergab rißfreie Körper von 95% th.D. (6,03 g/cm³).

### Beispiel 6:

Für die Herstellung von grobdispersem Pulver aus Y₂O₃-stabilisiertem ZrO₂ mit homogen verteiltem TiO₂ wurde eine Gießsuspension folgender Zusammensetzung verwendet:

| | |
|---|---|
| 47,5 g/l | Zr |
| 2,5 g/l | Y |
| 60,0 g/l | TiO₂-Pulver |
| 50,0 g/l | THFA |
| 5,0 g/l | PVA |

Die Suspension wurde durch Mischen von abgestumpfter Zirkonnitrat-Lösung, deren Herstellung in Beispiel 2 beschrieben ist, mit Yttriumnitrat-Lösung, Wasser und Tetrahydrofurfurylalkohol (THFA) sowie durch Dispergieren von feinem TiO₂-Pulver (Marke Kronos A der Firma Kronos Titan GmbH) mit Hilfe eines Ultraturrax und zuletzt durch langsames Zumischen der PVA-Lösung hergestellt. Unter ständigem Rühren wurde diese Suspension wie in Beispiel 1 zu kugelförmigen Teilchen verarbeitet. Nach dem Waschen mit Wasser und Isopropanol sowie dem Trocknen im Rotationsverdampfer wurden die Teilchen 2h bei 700°C an Luft kalziniert. Eine repräsentative Probe wurde wie folgt analysiert:

| | |
|---|---|
| Mittl. Teilchendurchmesser | 288 µm |
| Quecksilberdichte | 1,49 g/cm³ |
| Spezif. Oberfläche nach BET | 61,0 m²/g |
| Glühverlust | 3,2 Gew.% |
| C-Gehalt | 0,06 Gew.% |

Die Zusammensetzung war 50,4 Gew.% ZrO₂, 2,5 Gew.% Y₂O₃, 47,1 Gew.% TiO₂.

Das aus diesen Teilchen bestehende Pulver wurde in einer Matrize zu Zylindern vom Durchmesser 7 mm und einer Höhe 7 im gepreßt. Die Grünlinge wurden 2h bei 1400°C an Luft zu rißfreien Sinterkörpern der Dichte 4,8 g/cm³ gesintert.

## Patentansprüche

1. Verfahren zur Herstellung von Pulver aus teil-stabilisiertem Zirkonoxid einer Komgröße von zumindest 100 µm, vorzugsweise zwischen 100 µm und 1000 µm, vorzugsweise bestimmt für hochdichte keramische Werkstoffe,
**dadurch gekennzeichnet**,
daß eine zumindest ein gehärtetes und/oder feindispersiertes Additiv enthaltende, bis kurz vor dem Fällpunkt abgestumpfte wäßrige Lösung eines Zirkonsalzes in Form von Zirkonnitrat mit einem Nitrat-Zirkon-Molverhältnis über 1,1:1 in Tröpfchenform mittels elektromagnetischer Schwingungsanregung vertropft wird, daß die Tröpfchen zunächst durch Einwirken von Ammoniakgas zu diskreten Gelteilchen vorverfestigt und sodann in einem väßrigen ammoniakalischen Fällbad aufgefangen und darin zu diskreten festen Gelteilchen gehärtet werden, daß danach die Gelteilchen
- frei von Ammoniumsalzen gewaschen und anschließend
- mit einem mit Wasser mischbaren Alkohol entwässert,
- getrocknet, und
- kalziniert werden.

2. Verfahren nach Anspruch 1,
**dadurch gekennzeichnet**,
daß als Additive wasserlösliche Metallnitrate und/oder feindisperse Metalloxide verwendet werden.

3. Verfahren nach Anspruch 1,
**dadurch gekennzeichnet,**
daß als Additiv Yttriumnitrat und/oder Cernitrat und/oder Titandioxid und/oder ein wasserlösliches organisches Polymer wie Polyvinalalkohol und/oder ein Dispergiermittel wie Isopropanol oder Tetrahydrofurfuryalkohol verwendet werden.

4. Verfahren nach Anspruch 1,
**dadurch gekennzeichnet**,
daß die mechanischen Schwingungen durch Übertragung elektromagnetischer Schwingungen auf eine flexible Rohrwand erzeugt werden.

5. Verfahren nach Anspruch 1,
**dadurch gekennzeichnet**,
daß zur Entwässerung der Gelteilchen Isopropanol verwendet wird.

6. Verfahren nach Anspruch 1,
**dadurch gekennzeichnet**,
daß die Gelteilchen zwischen 600°C und 900°C an feuchter Luft kalziniert werden.

7. Verfahren nach Anspruch 1,
**dadurch gekennzeichnet**,
daß die Kalzinierung bei einer Luftfeuchte zwischen 10g und 30 g Wasserdampf pro Kubikmeter Luft erfolgt.

8. Verfahren zur Herstellung von hochdichten Keramikkörpern aus Y₂O₃-teilstabilisiertem ZrO₂,
**dadurch gekennzeichnet**,
- daß eine Gießlösung enthaltend
- eine Polyvinylalkohol-Lösung
- eine bis kurz vor dem Fällpunkt abgestumpfte Zirkonnitrat-Lösung mit einem Nitrat-Zirkon-Molverhältnis über 1,1:1 sowie
- eine Yttriumnitrat-Lösung
- durch elektromagnetische Schwingungsanregung zur Bildung von Tröpfchen vertropft wird,
- daß die Tröpfchen zur spontanen Ausbildung einer festen Oberflächenhaut einer Ammoniakgasatmosphäre ausgesetzt werden,
- daß die so oberflächenverfestigten Teilchen in einer Ammoniaklösung aufgefangen werden,
- daß nach einer Verweilzeit in der Ammoniaklösung die Teilchen
- nitratfrei gewaschen,
- mit einem Alkohol entwässert und
- sodann getrocknet werden,
- und daß anschließend gut rieselfähige Teilchen kalziniert, zu Formkörpern geformt und gesintert werden.

9. Verfahren nach Anspruch 8,
**dadurch gekennzeichnet**,
daß die Verweilzeit der oberflächenverfestigten Teilchen in der Ammoniaklösung in etwa 30 min. beträgt.

10. Verfahren nach Anspruch 8,
**dadurch gekennzeichnet**,
daß die Teilchen an Luft vorzugsweise in einem Temperaturbereich von in etwa 400°C - 700°C, vorzugsweise von 500°C kalziniert werden.

## Claims

1. Method for producing powder from partially stabilized zirconium oxide with a particle size of at least 100 µm, preferably between 100 µm and 1000 µm, preferably intended for high-density ceramic materials,
**characterized in that**
an aqueous solution of a zirconium salt in droplet form as zirconium nitrate, with a molar nitrate/zirconium ratio exceeding 1,1:1, being neutralized to just before the precipitation point and containing at least one hardened and/or finely dispersed additive, is dropletized by means of electromagnetic vibratory excitation; that the droplets are first preconsolidated by the action of ammonia gas into discrete gel particles and then collected in an aqueous ammonia precipitation bath and therein hardened into discrete solid gel particles; and that thereafter the gel particles are
- washed until free of ammonia salts, and then
- dewatered in an alcohol that is miscible with water,
- dried, and
- calcined.

2. Method according to Claim 1,
**characterized in that**
water-soluble metal nitrates and/or finely dispersed metal oxides are used as additives.

3. Method according to Claim 1,
**characterized in that**
yttrium nitrate and/or cerium nitrate and/or titanium dioxide and/or a water-soluble organic polymer such as polyvinyl alcohol and/or a dispering agent such as isopropanol or tetrahydrofurfuryl alcohol are used as additives.

4. Method according to Claim 1,
**characterized in that**
the mechanical vibrations are generated by transferring electromagnetic vibrations onto a flexible tube wall.

5. Method according to Claim 1,
**characterized in that**
isopropanol is used to dewater the gel particles.

6. Method according to Claim 1,
**characterized in that**
the gel particles are calcined at between 600°C and 900° in moist air.

7. Method according to Claim 1,
**characterized in that**
calcination occurs at a humidity of between 10 g and 30 g of water vapor per cubic meter of air.

8. Method for producing high-density ceramic elements from Y₂O₃-partially stabilized ZrO₂,
**characterized in that**
- a pouring solution containing
- a polyvinyl alcohol solution,
- a zirconium nitrate solution with a molar nitrate/zirconium ratio exceeding 1.1:1 being neutralized to just before the precipitation point, and
- a yttrium nitrate solution
- is dropletized by electromagnetic vibratory excitation to form droplets;
- said droplets are exposed to an atmosphere of gaseous ammonia for spontaneously forming a solid surface skin;
- the particles, surface-consolidated in this manner, are collected in an ammonia solution;
- after a certain residence time in the ammonia solution the particles are
- washed until free of nitrates,
- dewatered in an alcohol,
- then dried;
- and easily pourable particles are subsequently calcined, formed into ceramic elements and then sintered.

9. Method according to Claim 8,
**characterized in that**
the residence time of the surface-consolidated particles in the ammonia solution is approximately 30 min.

10. Method according to Claim 8,
**characterized in that**
the particles are calcined in air, preferably in a temperature range of approximately 400° - 700°C, preferably 500°.

## Revendications

1. Procédé pour la fabrication de poudre à partir d'oxyde de zirconium partiellement stabilisé, d'une taille de grains d'au moins 100 µm, de préférence entre 100 µm et 1000 µm, de préférence destinée à des matériaux céramique de haute masse spécifique, caractérisé en ce que
une solution aqueuse d'un sel de zirconium présentant la forme d'un nitrate de zirconium présentant un rapport molaire nitrate-zirconium supérieur à 1,1:1, contenant au moins un additif durci et/ou finement divisé, et neutralisée juste avant la précipitation, est transformée en gouttelettes au moyen d'une excitation d'oscillation électromagnétique, en ce que les gouttelettes sont tout d'abord, sous l'action d'un gaz ammoniac, présolidifiées en particules de gel distinctes et sont ensuite recueillies dans un bain de précipitation contenant une solution aqueuse d'ammoniac, dans lequel elles sont durcies sous forme de particules de gel solides distinctes, et en ce qu'ensuite les particules
- sont débarrassées des sels d'ammoniac par lavage et ensuite
- sont débarrassées de l'eau au moyen d'un alcool miscible avec l'eau,
- sont séchées, et
- sont calcinées.

2. Procédé selon la revendication 1, caractérisé en ce qu'on utilise comme additifs des nitrates de métal solubles dans l'eau et/ou des oxydes métalliques finement dispersés.

3. Procédé selon la revendication 1, caractérisé en ce qu'on utilise comme additifs du nitrate d'yttrium et/ ou du nitrate de cérium et/ou du dioxyde de titane et/ou un polymère organique soluble dans l'eau tel qu'un alcool polyvinylique et/ou un agent dispersant tel que de l'isopropanol ou de l'alcool tétrahydrofurfurylique.

4. Procédé selon la revendication 1, caractérisé en ce que les oscillations mécaniques sont créées par un transfert d'oscillations électromagnétiques sur une paroi tubulaire flexible.

5. Procédé selon la revendication 1, caractérisé en ce qu'on utilise de l'isopropanol pour éliminer l'eau des particules de gel.

6. Procédé selon la revendication 1, caractérisé en ce que les particules de gel sont calcinées entre 600°C et 900°C en présence d'air humide.

7. Procédé selon la revendication 1, caractérisé en ce que la calcination s'effectue dans de l'air humide contenant entre 10 g et 30 g de vapeur d'eau par mètre cube.

8. Procédé de fabrication d'éléments en céramique de haute masse spécifique, en ZrO₂ partiellement stabilisé par du Y₂O₃,
caractérisé en ce que
- une solution de coulée contient
- une solution d'alcool polyvinylique
- une solution de nitrate de zirconium présentant un rapport molaire nitrate-zirconium supérieur à 1,1:1, neutralisée juste avant précipitation, ainsi que
- une solution de nitrate d'yttrium
- est transformée en gouttelettes par excitation oscillante électromagnétique, en vue de la formation de gouttelettes,
- les gouttelettes sont exposées à une atmosphère de gaz ammoniac en vue de la formation spontanée d'une pellicule de surface solide,
- en ce que les particules à surface solidifiée sont récupérées dans une solution d'ammoniac,
- en ce qu'après un temps de séjour dans une solution d'ammoniac les particules
- sont débarrassées des nitrates par lavage,
- sont débarrassées de l'eau avec un alcool et
- sont ensuite séchées,
- et en ce que les particules présentant une bonne aptitude à l'écoulement sont ensuite calcinées, façonnées en corps moulés et frittés.

9. Procédé selon la revendication 8, caractérisé en ce que le temps de séjour des particules à surface solidifiée dans la solution d'ammoniac est d'environ 30 min.

10. Procédé selon la revendication 8, caractérisé en ce que les particules sont calcinées à l'air, de préférence dans une plage de température d'environ 400°C-700°C, de préférence à 500°C.
